# NEUE EUROPÄISCHE PATENTSCHRIFT

(11) **EP 2 090 462 B2**
(45) Veröffentlichungstag und Bekanntmachung des Hinweises auf die Entscheidung über den Einspruch: **06.03.2019**
(45) Hinweis auf die Patenterteilung: 19.11.2014
(21) Anmeldenummer: 09000260.1
(22) Anmeldetag: 10.01.2009
(51) Int. Cl.: B60P 1/64, B62D 21/14, B62D 53/06

(54) **Längenverstellbares Containerchassis**
Container chassis with adjustable length
Châssis de conteneur réglable en longueur

(30) Priorität: 18.02.2008 DE 102008009796
(43) Veröffentlichungstag der Anmeldung: 19.08.2009
(73) Patentinhaber: Fahrzeugwerk Bernard Krone GmbH, 48480 Spelle (DE)
(72) Erfinder: Krone, Bernard, 48480 Spelle (DE); Evers, Heinz, 49733 Haren (DE)
(74) Vertreter: Pott, Ulrich

(56) Entgegenhaltungen:
- EP-A- 1 486 375
- EP-A- 1 728 709
- FR-A- 2 880 861

## Beschreibung

Die Erfindung bezieht sich auf ein längenverstellbares Containerchassis mit einem eine hintere und vorzugsweise eine vordere Radachse mit zugeordneten Rädersätzen umfassenden Fahrgestellrahmen und einem relativ zu dem Fahrgestellrahmen in dessen Längsrichtung beweglichen und mit Containerverriegelungselementen versehenen sowie einen hinteren Querträger aufweisenden Laderahmen, wobei der hintere Querträger des Laderahmens in einer Betriebsstellung geringer Chassislänge hinter der hinteren Radachse und in einer Betriebsstellung mit größerer Chassislänge vor der hinteren Radachse gelegen ist.

Für den Containertransport sind längenverstellbare bzw. längenveränderliche Containerchassis bekannt, um variabel auf unterschiedliche Containergrößen reagieren zu können. Dabei sind insbesondere Iso-Container und High Cube (HC)-Container bekannt, die unterschiedliche Höhen haben. Darüber hinaus ist es bekannt, Container beispielsweise mit einer Länge von 20' auszubilden aber auch solche mit 30' oder 40', wobei maximale Transporthöhen nicht überschritten werden dürfen. Die maximalen Fahrzeugabmessungen unter Einschluß ihrer maximalen Höhe sind in verschiedenen Ländern unterschiedlich gesetzlich festgelegt, was bei der Konstruktion eines Containerchassis berücksichtigt werden muß.

Des weiteren ist zu berücksichtigen, daß beim Transport eines beladenen Containers mindestens ein Viertel der Gewichtskraft des Containerchassis inklusive Fahrgestell, Container und Beladung auf der Hinterachse des Zugfahrzeuges abgestützt sein muß (Satteldruck). Werden Container geringerer Länge transportiert mit einem Containerchassis mit einem Fahrgestell mit z.B. drei Achsen mit zugehörigen Radsätzen, also sechs Rädern, ist dabei das Fahrgestell in aller Regel etwa mittig unterhalb des Containers angeordnet, wodurch der Forderung nach der entsprechenden Gewichtsabstützung auf der hinteren Achse des Zugfahrzeuges nicht mehr gerecht werden kann. Um auch dies verändern zu können, ist es bekannt, das Containerchassis längenverstellbar derart auszubilden, daß der Fahrgestellrahmen relativ zu dem Laderahmen verstellt werden kann und in aller Regel teleskopierbar ausgebildet ist, so daß der Fahrgestellrahmen mitsamt den Achsen und Radsätzen in eine gegenüber dem Container rückversetzte Betriebsstellung überführt werden kann, so daß eine höhere Gewichtslast auf die Hinterachse des Zugfahrzeugs zu bringen ist.

Aus der EP 1 486 375 B1 ist ein längenverstellbares Containerchassis der eingangs genannten Art bekannt, bei der für eine Überführung des Laderahmens in eine Betriebsstellung mit größerer Chassislänge aus einer Betriebsstellung geringer Chassislänge der Laderahmen zunächst in eine erhöhte Höhenlage zu verstellen ist, damit während der Längenverstellung der hintere Querträger des Laderahmens nicht mit den Rädern der Radsätze des Fahrgestellrahmens kollidiert. Dazu ist eine pneumatische Federung vorgesehen, durch die das Chassis anzuheben ist auf eine Verschiebehöhe, in der sichergestellt ist, daß der hintere Querträger nicht mit den Radsätzen kollidiert. Danach ist das Chassis wiederum pneumatisch abzusenken, beispielsweise auf eine Ladehöhe bzw. Transporthöhe.

Der damit einhergehende bauliche Aufwand ist jedoch erheblich. Es müssen entsprechende Pneumatikeinheiten und Steuerungselemente vorgesehen sein, um den Hebevorgang durchzuführen. Des weiteren ist ein Verschiebevorgang zeitaufwändig, da nicht nur die Verstellung in Längsrichtung des Chassis durchgeführt werden muß, sondern auch noch die Verstellung in unterschiedliche Höhenlagen.

Es ist Aufgabe der vorliegenden Erfindung, ein längenverstellbares Containerchassis der eingangs genannten Art dahingehend zu verbessern, daß trotz der Längenverstellbarkeit der bauliche Aufwand gegenüber bekannten Lösungen verringert ist und darüber hinaus ein längenverstellbarer Vorgang zügig zu vollziehen ist.

Zur Lösung dieser Aufgabe zeichnet sich das längenverstellbare Containerchassis durch die im Patentanspruch 1 angegebenen Merkmale aus.

Damit ist ein längenverstellbares Containerchassis geschaffen, bei dem durch die besondere Ausbildung des hinteren Querträgers mit der Auswölbung bzw. eines durch die Konturgebung des Querträgers in seinen Außenbereichen geschaffenen Freiraumes über den Rädersatz der hinteren Radachse hinaus verstellt bzw. verschoben werden kann, ohne daß die Gefahr besteht, daß der hintere Querträger mit dem Rädersatz der hinteren Radachse kollidiert. Dies ist mit baulich einfachen Mitteln zu vollziehen. Eines irgendwie gearteten Anhebevorganges bedarf es nicht. Gleichwohl sind an dem hinteren Querträger die entsprechenden Abstützflächen für einen Container zu schaffen, und zwar auch für Container unterschiedlicher Länge und unterschiedlicher Höhe. So kann beispielsweise für ein Container mit geringerer Länge, z.B. 20', an dem hinteren Querträger an jeder Seite ein Containerverriegelungselement (Twist Lock) vorgesehen werden. Damit dieser bei dem Transport eines Containers mit größerer Länge (z.B. 40') nicht störend ist, ist nach der Erfindung vorgesehen, daß dieses Verriegelungselement klappbar an dem hinteren Querträger befestigt ist, so daß es für die Verriegelung z.B. eines 20' Containers, bei der die Betriebsstellung geringer Chassislänge eingestellt ist, ausgeklappt ist und als Containerverriegelungselement für den 20' Container dient. Wird dagegen ein größerer Container transportiert, der ein längsverstelltes Containerchassis erfordert, wird das jeweilige Verriegelungselement an jeder Seite des hinteren Querträgers des Laderahmens weggeklappt.

Dazu ist erfindungsgemäß der hintere Querträger nach Art einer Wanne ausgebildet und hat einen Aufnahmeraum, in dem das jeweilige Containerverriegelungselement nach dem Wegklappen eintaucht, so daß die oberen Flächen des hinteren Querträgers als freie Stützflächen für einen Container größerer Länge dienen können.

Hinsichtlich weiterer wesentlicher Ausgestaltung der Erfindung wird auf weitere Unteransprüche, die nachfolgende Beschreibung und die Zeichnung verwiesen. In der Zeichnung zeigen:
- Fig. 1: in einer schematischen Seitendarstellung ein Ausführungsbeispiel des längenverstellbaren Containerchassis nach der Erfindung in einer Betriebsstellung geringer Chassislänge;
- Fig. 2: eine zu Fig. 1 analoge Darstellung mit einem Container geringer Länge aber längenverstellte Containerchassis zwecks Erhöhung des Satteldruckes des Zugfahrzeuges;
- Fig. 3: eine zu den Figuren 1 und 2 analoge Darstellung eines längenverstellten Containerchassis auf einer Betriebsstellung mit größerer Chassislänge und einem 40' Container;
- Fig. 4: ausschnittsweise eine perspektivische Darstellung auf den hinteren Querträger;
- Fig. 5: den hinteren Querträger in einer perspektivischen Darstellung schräg von hinten und
- Fig. 6: ausschnittsweise in einer perspektivischen Darstellung eine Darstellung auf das Ausführungsbeispiel nach Fig. 1, ohne Container mit einem eingeklappten Verriegelungselement (links) und einem Verriegelungselement in Transportstellung (rechts).

In der Zeichnung sind nur die zur unmittelbaren Verständnis der Erfindung notwendigen Teile des gezeigten Ausführungsbeispiels eines längenverstellbaren Containerchassis 1 dargestellt.

Das dargestellte längenverstellbare Containerchassis hat einen Fahrgestellrahmen 2, an dem in dem dargestellten Ausführungsbeispiel drei Radachsen 3.1, 3.2 und 3.3 mit einem vorderen Radsatz 4, einen mittleren Radsatz 5 und einem hinteren Radsatz 6 vorgesehen sind. Darüber hinaus ist ein Laderahmen 7 vorgesehen, an den sich der Aufliegerhals des Sattelaufliegers anschließt, der über einen Königszapfen mit einem Zugfahrzeug zu verbinden ist. Auf dem Laderahmen 7 ist ein Container 9 abgesetzt, der mit Verriegelungselementen 10 (Twist Lock) verriegelt ist.

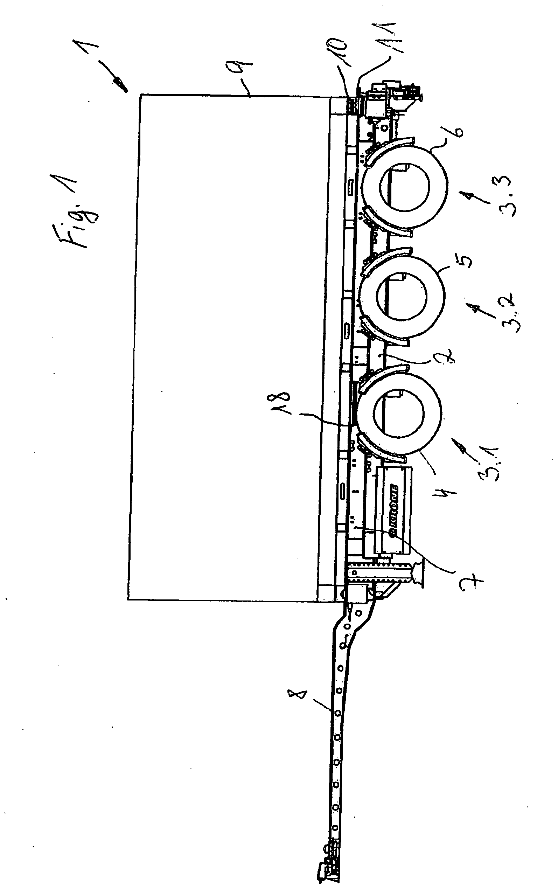

In dem Ausführungsbeispiel nach Fig. 1 ist ein 20' Container 9 auf dem Containerchassis 1 abgestützt. Dazu ist der Laderahmen 7 in eine Betriebsstellung geringer Chassislänge gebracht. Der hintere Querträger 11 des Laderahmens 7 ist damit in der Betriebsstellung geringer Chassislänge hinter der hinteren Radachse 3.3 gelegen.

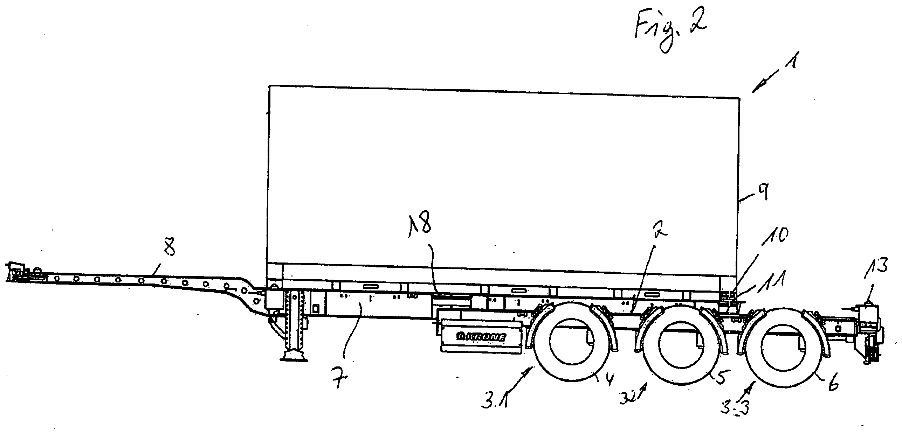

Um den Satteldruck auf das Zugfahrzeug zu erhöhen, ist der Laderahmen in dem Ausführungsbeispiel nach Fig. 2 mit abgestelltem 20' Container in eine Betriebsstellung größerer Chassislänge gebracht, wobei der hintere Querträger 11 in eine Lage vor die hintere Radachse 3.3 verstellt ist. Diese Verstellung ist ein einfacher Verschiebevorgang, der mit einfachen Steuerungsmitteln erfolgen kann. Dabei ist die aktuelle Höhe des Fahrzeuges nicht zu kontrollieren bzw. nicht zu verändern, bevor der Verschiebevorgang ausgelöst bzw. beendet wird. Für ein Verschieben werden die Räder gebremst bzw. blockiert, wonach das Zugfahrzeug den Laderahmen 7 mit darauf abgestellten Container 9 vorzieht. Danach liegt ein größeres Gewicht auf dem Aufliegerhals 8 und entspricht damit den gesetzlichen Auflagen.

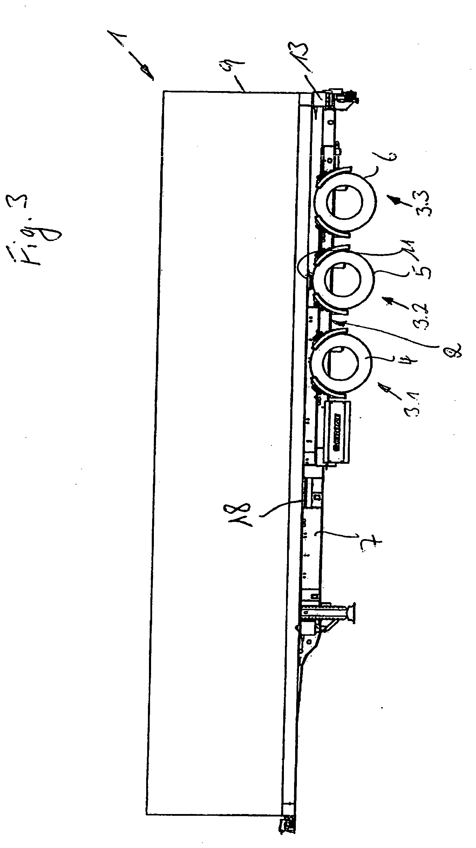

In Fig. 3 ist der Laderahmen in seine Maximalposition ausgezogen, so daß ein 40' Container 12 abgestellt ist. Dieser ist mit den Verriegelungselementen 13 verriegelt. Der hinter Querträger 11 ist wiederum vor der hinteren Radachse 3.3 gelegen und in diesem Ausführungsbeispiel etwa oberhalb der mittleren Radachse 3.2.

In den Fig. 1 bis 3 ist ein vorderer Doppelquerträger 18 ersichtlich, der in Fig. 1 oberhalb der Radachse 3.1 gelegen ist und ebenfalls seitliche Auswölbungen hat.

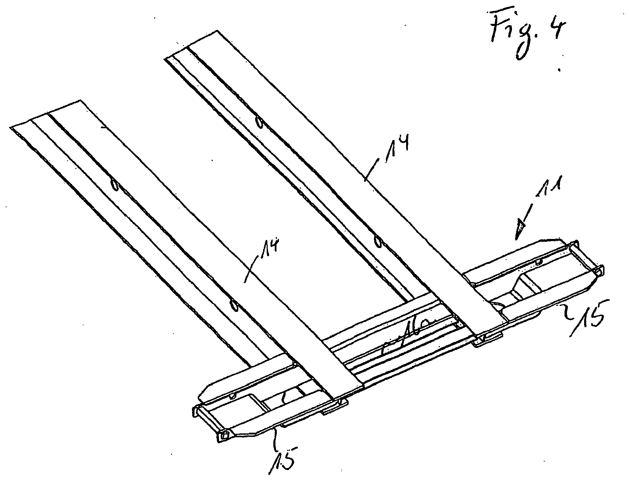

Aus den Fig. 4 bis 6 ist im einzelnen die nähere Gestaltung des Querträgers 11 ersichtlich. Dieser hintere Querträger 11, an dem die Längsträger 14 angreifen, ist mit seitlichen Auswölbungen 15 versehen, ansonsten nach Art einer Wanne ausgebildet, so daß er einen von oben bereichsweise offenen Aufnahmeraum 16 aufweist. Die Seitenwände sind jeweils abgewinkelt und bieten somit obere Auflageflächen für die Längsträger 14. Im unteren Bereich der Seitenwände sind die beiden gegenüberliegenden Seitenwände aufeinanderzugekantet, so daß sich eine im wesentlichen Z-förmige Querschnittsgestaltung ergibt mit senkrecht verlaufendem Mittelbereich.

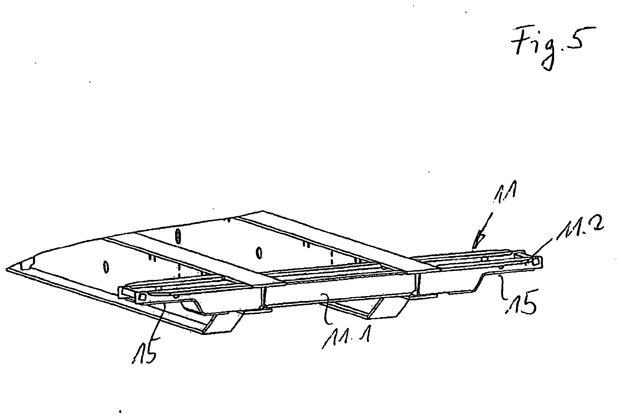

Wie im einzelnen aus Fig. 5 näher hervorgeht, sind die Auswölbungen 15 derart vorgesehen, daß der Querträger 11 abgestuft ausgebildet ist mit einem Mittelbereich 11.1 größerer Höhe und einem Außenbereich 11.2 geringerer Höhe. Diese Höhe ist so gewählt, daß unter Berücksichtigung des Durchmessers des Rades 6 der hinteren Radachse 3.3 während der Verschiebung des Laderahmens 7 sich der hintere Querträger 11 oberhalb des hinteren Rades 6 aus seiner Lage hinter der hinteren Radachse 3.3 in eine Lage vor die hintere Radachse 3.3 verschieben läßt, ohne daß er mit dem Rad 6 oder sonstigen Teilen kollidiert.

Ein Anheben des Laderahmens 7 mit Container 9 ist mithin nicht notwendig. Damit geht auch eine Zeitersparnis für einen Verstellvorgang gegenüber bekannten Lösungen aus dem Stand der Technik einher.

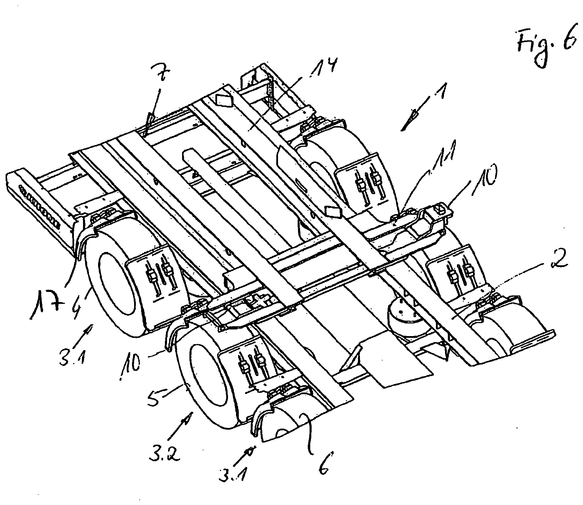

Aus Fig. 6 ist eine weitere Besonderheit der vorliegenden Erfindung ersichtlich. In den Figuren 4 und 5 ist auf die Darstellung der Containerverriegelungselemente 10 aus Gründen der besseren Übersichtlichkeit verzichtet worden. In Fig. 6 sind diese dargestellt, und zwar einmal im eingeklappten Zustand und einmal in ihrer Transportstellung (rechts). Ihre Anordnung und ihre Bauhöhe ist dabei nicht nur an die Containeranforderungen abgestimmt, sondern auch an den Querträger 11 insgesamt. Durch seine Wannenform bietet er die Möglichkeit, daß sich die Containerverriegelungselemente 10 in den durch die Wanne geschaffenen Aufnahmeraum16 derart einklappen lassen, daß diese im eingeklappten Zustand einen oberhalb abgestellten Container nicht behindern, sondern vollständig in dem Aufnahmeraum des Querträgers 11 eingetaucht sind. Dieser eingeklappte Zustand ist verwirklicht bei Aufnahme eines 40' Containers, wie dieser in Fig. 3 dargestellt ist.

Die in Fig. 6 ersichtlichen Kotflügel 17 sind direkt am Fahrgestellrahmen 2 befestigt, so daß sie deutlich geringeren Schwingungen ausgesetzt sind, was die Lebensdauer erhöht. Die Haltevorrichtungen dieser Kotflügel 17 können dadurch auch wesentlich einfacher ausgeführt und damit preiswerter sein, z.B. durch Verwendung von Standardbauteilen aus der Großserienproduktion.

Da das Anheben des Laderrahmens 7 nicht für eine Längsverstellung des Containerchassis erforderlich ist, kann nicht nur Zeit sondern auch Energie eingespart werden, da die für das Anheben benötigte Lu' nicht durch den Kompressor des Zugfahrzeuges erneut produziert werden muß. Somit fällt auch keine Wartezeit an, um die erforderliche benötigt Luft zu erzeugen.

## Patentansprüche

1. Längenverstellbares Containerchassis (1) mit einem eine hintere (3.3) und vorzugsweise eine vordere (3.2) Radachse mit zugeordneten Rädersätzen (5,6) umfassenden Fahrgestellrahmen (2) und einem relativ zu dem Fahrgestellrahmen (2) in dessen Längsrichtung beweglichen und mit Containerverriegelungselementen (10) versehenen sowie einen hinteren Querträger (11) aufweisenden Laderahmen (7), wobei der hintere Querträger (11) des Laderahmens (7) in einer Betriebsstellung geringer Chassislänge hinter der hinteren Radachse (3.3) und in einer Betriebsstellung mit größerer Chassislänge vor der hinteren Radachse (3.3) gelegen ist, wobei der hintere Querträger (11) des Laderahmens (7) an seinen beiden seitlichen Außenbereichen eine eine Verschiebung des hinteren Querträgers (11) oberhalb des Rädersatzes (6) der hinteren Radachse (3.3) ermöglichende Auswölbung (15) aufweist und wobei der hintere Querträger (11) in seiner Längserstreckung abgestuft ausgebildet ist und in den seitlichen Außenbereichen Auflageenden (11.2) hat, deren Höhe gegenüber der Höhe eines mittleren Bereiches (11.1) unter Ausbildung der Auswölbung (15) geringer ausgebildet ist und zwar derart, dass die Höhe so gewählt ist, dass unter Berücksichtigung des Durchmessers des Rades (6) der hinteren Radachse (3.3) während der Verschiebung des Laderahmens (7) sich der hintere Querträger (11) oberhalb des hinteren Rades (6) aus seiner Lage hinter der hinteren Radachse (3.3) in eine Lage vor die hintere Radachse (3.3) verschieben lässt, ohne dass er mit dem Rad (6) oder sonstigen Teilen kollidiert, **dadurch gekennzeichnet, dass** der hintere Querträger (11) im Querschnitt nach Art einer Wanne ausgebildet ist.

2. Längenverstellbares Containerchassis nach Anspruch 1, **dadurch gekennzeichnet, daß** am hinteren Querträger (11) die Containerverriegelungselemente (10) klappbar festgelegt sind.

3. Längenverstellbares Containerchassis nach Anspruch 2, **dadurch gekennzeichnet, dass** die Containerverriegelungselemente (10) derart in den die durch die wannenförmige Ausbildung des hinteren Querträgers (11) geschaffenen Aufnahmeraum (16) einklappbar sind, so dass sie mit der Oberfläche des hinteren Querträgers (11) im wesentlichen bündig oder zu dieser versenkt angeordnet sind im eingeklappten Zustand.

4. Längenverstellbares Containerchassis nach einem der Ansprüche 1 bis 3, **dadurch gekennzeichnet, daß** der Laderahmen (7) mit seinem hinteren Querträger (11) in unterschiedliche Betriebsstellungen unterschiedlicher Chassislänge höhengleich verschiebbar ist.

5. Längenverstellbares Containerchassis nach einem der Ansprüche 1 bis 4, **dadurch gekennzeichnet, daß** an dem Fahrgestellrahmen (2) endseitig weitere Containerverriegelungselemente (13) vorgesehen sind.

6. Längenverstellbares Containerchassis nach einem der Ansprüche 1 bis 5, **dadurch gekennzeichnet, daß** der hintere Querträger (11) jeweils gegensinnig abgewinkelte Längsseitenwände hat.

7. Längenverstellbares Containerchassis nach einem der Ansprüche 1 bis 6, **dadurch gekennzeichnet, daß** Gelenkzapfen von Containerverriegelungselementen (10) im Bereich der Auswölbung (15) an dem hinteren Querträger (11) vorgesehen sind.

8. Längenverstellbares Containerchassis nach einem der Ansprüche 1 bis 7, **dadurch gekennzeichnet, daß** Längsträger (14) des Laderahmens (7) mit Abstand zur Auswölbung (15) mit dem hinteren Querträger (11) verbunden sind.

## Claims

1. Length-adjustable container chassis (1) comprising a chassis frame (2) having a rear (3.3) and preferably a front (3.2) wheel axle with associated wheel sets (5, 6), and a loading frame (7) which is movable in its longitudinal direction relative to the chassis frame (2) and is provided with container locking elements (10) and comprises a rear crossbeam (11), the rear crossbeam (11) of the loading frame (7) being located behind the rear wheel axle (3.3) in an operating position having a shorter chassis length and in front of the rear wheel axle (3.3) in an operating position having a longer chassis length, the rear crossbeam (11) of the loading frame (7) comprising on its two lateral outer regions a curvature (15) which permits movement of the rear crossbeam (11) above the wheel set (6) of the rear wheel axle (3.3), and the rear crossbeam (11) being designed to be graduated in its longitudinal extension and having supporting ends (11.2) in the lateral outer regions, the height of which ends is less than the height of a middle region (11.1), leading to the formation of the curvature (15), namely in such a way that the height is selected such that, with respect to the diameter of the wheel (6) of the rear wheel axle (3.3), the rear crossbeam (11) can be moved above the rear wheel (6) from its position behind the rear wheel axle (3.3) into a position in front of the rear wheel axle (3.3) during the movement of the loading frame (7) without said crossbeam colliding with the wheel (6) or other parts, **characterised in that** the rear crossbeam (11) has a trough-like cross section.

2. Length-adjustable container chassis according to claim 1, **characterised in that** the container locking elements (10) are fixed on the rear crossbeam (11) so as to be foldable.

3. Length-adjustable container chassis according to claim 2, **characterised in that** the container locking elements (10) can be retracted into the receiving region (16) formed by the trough-like shape of the rear crossbeam (11) such that they are arranged substantially flush with the surface of the crossbeam (11) or countersunk thereto in the retracted state.

4. Length-adjustable container chassis according to any of claims 1 to 3, **characterised in that** the loading frame (7) and its rear crossbeam (11) are movable at the same level into different operating positions having different chassis lengths.

5. Length-adjustable container chassis according to any of claims 1 to 4, **characterised in that** further container locking elements (13) are provided on the end of the chassis frame (2).

6. Length-adjustable container chassis according to any of claims 1 to 5, **characterised in that** the rear crossbeam (11) has longitudinal side walls which are angled in respectively opposite directions.

7. Length-adjustable container chassis according to any of claims 1 to 6, **characterised in that** pivot pins of container locking elements (10) are provided in the region of the curvature (15) on the rear crossbeam (11).

8. Length-adjustable container chassis according to any of claims 1 to 7, **characterised in that** longitudinal beams (14) of the loading frame (7) are connected to the rear crossbeam (11) at a distance from the curvature (15).

## Revendications

1. Châssis de conteneur réglable en longueur (1) avec un cadre de châssis (2) comportant un essieu de roue arrière (3.3) et de préférence un essieu de roue avant (3.2) avec des paires de roues (5, 6) associées et un cadre de chargement (7) mobile par rapport au cadre de châssis (2) dans le sens longitudinal de celui-ci et pourvu d'éléments de verrouillage de conteneur (10) ainsi que présentant une traverse arrière (11), la traverse arrière (11) du cadre de chargement (7) étant placée dans une position de fonctionnement avec une plus petite longueur de châssis derrière l'essieu de roue arrière (3.3) et dans une position de fonctionnement avec une plus grande longueur de châssis devant l'essieu de roue arrière (3.3), la traverse arrière (11) du cadre de chargement (7) présentant sur ses deux zones extérieures latérales un bombage (15) permettant un déplacement de la traverse arrière (11) au-dessus de la paire de roues (6) de l'essieu de roue arrière (3.3), et la traverse arrière (11) étant réalisée de manière étagée dans le sens longitudinal de celle-ci et présente dans les zones extérieures latérales des extrémités d'appui (11.2) dont la hauteur par rapport à la hauteur d'une zone centrale (11.1) est conçue plus petite en réalisant le bombage (15), notamment de telle sorte que la hauteur est sélectionnée qu'en tenant compte du diamètre de la roue (6) de l'essieu de roue arrière (3.3) pendant le déplacement du châssis de chargement (7), la traverse arrière (11) peut être déplacée au-dessus de la roue arrière (6) de sa position derrière l'essieu de roue arrière (3.3) en une position devant l'essieu de roue arrière (3.3) sans entrer en collision avec la roue (6) ou d'autres pièces, **caractérisé en ce que** la traverse arrière (11) présente une section transversale en cuvette.

2. Châssis de conteneur réglable en longueur selon la revendication 1, **caractérisé en ce que** les éléments de verrouillage de conteneur (10) sont fixés à la traverse arrière (11) de manière rabattable.

3. Châssis de conteneur réglable en longueur selon la revendication 2, **caractérisé en ce que** les éléments de verrouillage de conteneur (10) sont rabattables dans l'espace de réception (16) créé par la réalisation en cuvette de la traverse arrière (11) de telle sorte qu'ils sont disposés substantiellement à fleur ou noyés par rapport à la surface de la traverse arrière (11) à l'état rabattu.

4. Châssis de conteneur réglable en longueur selon l'une quelconque des revendications 1 à 3, **caractérisé en ce que** le châssis de chargement (7) est mobile à la même hauteur que sa traverse arrière (11) dans différentes positions de fonctionnement avec une longueur de châssis différente.

5. Châssis de conteneur réglable en longueur selon l'une quelconque des revendications 1 à 4, **caractérisé en ce que** d'autres éléments de verrouillage de conteneur (13) sont prévus sur le cadre de châssis (2) côté extrémité.

6. Châssis de conteneur réglable en longueur selon l'une quelconque des revendications 1 à 5, **caractérisé en ce que** la traverse arrière (11) présente des parois latérales longitudinales coudées respectivement en sens inverse.

7. Châssis de conteneur réglable en longueur selon l'une quelconque des revendications 1 à 6, **caractérisé en ce que** des pivots des éléments de verrouillage de conteneur (10) sont prévus dans la zone du bombage (15) sur la traverse arrière (11).

8. Châssis de conteneur réglable en longueur selon l'une quelconque des revendications 1 à 7, **caractérisé en ce que** des longerons (14) du cadre de chargement (7) sont reliés à la traverse arrière (11) à distance du bombage (15).
